# EUROPÄISCHE PATENTSCHRIFT

(11) **EP 3 445 970 B1**
(45) Veröffentlichungstag und Bekanntmachung des Hinweises auf die Patenterteilung: **03.06.2020**
(21) Anmeldenummer: 17718523.8
(22) Anmeldetag: 20.04.2017
(51) Int. Cl.: F03D 1/06, F03D 80/50, B29C 73/02, B29C 73/04

(54) **VERFAHREN ZUR ERTÜCHTIGUNG VON ROTORBLÄTTERN BESTEHENDER WINDKRAFTANLAGEN**
HEAVY-DUTY UPGRADING METHOD FOR ROTOR BLADES OF EXISTING WIND TURBINES
PROCÉDÉ DE RENFORCEMENT DE PALES DE ROTOR D'ÉOLIENNES EXISTANTES

(30) Priorität: 20.04.2016 DE 102016206661
(43) Veröffentlichungstag der Anmeldung: 27.02.2019
(73) Patentinhaber: innogy SE, 45128 Essen (DE)
(72) Erfinder: FRANKE, Jan-Bernd, 52336 Elmshorn (DE); BARTMINN, Daniel, 25335 Elmshorn (DE)
(74) Vertreter: Richly & Ritschel Patentanwälte PartG mbB
(86) Internationale Anmeldenummer: PCT/EP2017/059372
(87) Internationale Veröffentlichungsnummer: WO 2017/182559

(56) Entgegenhaltungen:
- EP-A1- 2 222 454
- DE-A1-102007 006 643

## Beschreibung

Die Erfindung betrifft ein Verfahren zur Ertüchtigung von Rotorblättern bestehender Windkraftanlagen.

Die Erfindung betrifft weiterhin eine Kunststoffmembrane zur Verwendung bei dem Verfahren gemäß der Erfindung.

Windkraftanlagen umfassen in der Regel ein Turmbauwerk, eine auf dem Turmbauwerk drehbar angeordnete Gondel, die einen Generator trägt und einen an eine Rotorwelle des Generators angeflanschten Rotor, der mehrere Rotorblätter umfasst.

Solche Rotorblätter sind strukturell hochbelastete Bauteile, die in der Regel aus glasfaserverstärktem Kunststoff bestehen. Rotorblätter werden bei jeder Umdrehung mehr oder weniger stark auf Biegung beansprucht, was über die Lebensdauer mit einer gewissen Ermüdung des Materials einhergeht.

Darüber hinaus kommt es durch äußere Einwirkungen hin und wieder zu Schäden am Rotorblatt, die zur Schwächung der Struktur des Rotorblatts bis hin zum strukturellen Totalversagen führen können.

Es ist grundsätzlich bekannt, im Zuge üblicher Wartungsarbeiten kleinere Schäden an Rotorblättern auszubessern. Dies erfolgt in der Regel durch Auflaminieren oder Aufkleben von Glasfasermatten oder ähnlich flächigen Elementen. Häufig erfolgen Reparaturen durch einen lagenweisen Aufbau des Rotorblatts an der geschädigten Stelle.

Es sind zahlreiche Maßnahmen bekannt, die Strukturfestigkeit von Rotorblättern konstruktiv zu erhöhen. Derzeit werden Rotorblätter fast ausschließlich von Hand gefertigt. Daraus ergibt sich eine gewisse Schwankung in der Fertigungsqualität, die mit unterschiedlichen Belastbarkeiten von Rotorblättern einhergehen. Neuere Rotorblätter werden teilweise aus Karbonfasern anstelle von Glasfasern gefertigt.

Viele Windkraftanlagen mit Rotorblättern der sogenannten ersten Generation, die aus glasfaserverstärktem Kunststoff bestehen, werden demnächst an das Ende ihrer strukturellen und genehmigungsrechtlichen Laufzeit gelangen.

Es besteht daher grundsätzlich der Bedarf, eine strukturelle Verstärkung von Rotorblättern bereitzustellen, mit der eine Laufzeitverlängerung bestehender Windkraftanlagen erzielt werden kann.

Ein beispielhaftes Dokument aus dem Stand der Technik ist DE 10 2007 006643.

Der Erfindung liegt daher die Aufgabe zugrunde, ein Verfahren zur Ertüchtigung von Rotorblättern bestehender Windkraftanagen bereit zu stellen.

Der Erfindung liegt weiterhin die Aufgabe zugrunde, ein Material zur nachträglichen strukturellen Ertüchtigung von Rotorblättern bestehender Windkraftanlagen bereitzustellen.

Die Aufgabe wird gelöst durch ein Verfahren zur Ertüchtigung von Rotorblättern bestehender Windkraftanlagen, umfassend die Ummantelung und/oder Verlängerung des Profils wenigstens eines zu ertüchtigenden Rotorblattes, wobei die Ummantelung und/oder Verlängerung dadurch erfolgt, dass wenigstens eine faserverstärkte oder gewebeverstärkte Kunststoffmembrane an eine Mantelfläche des ursprünglichen aerodynamischen Profils des zu ertüchtigenden Rotorblattes angepasst wird und der ursprünglichen Kontur des zu ertüchtigenden Rotorblattes folgend mit dem zur ertüchtigenden Rotorblatt verbunden wird.

Ein solches Verfahren hat nicht nur den Vorteil, dass verhältnismäßig einfach die Struktur eines bestehenden Rotorblattes verstärkt werden kann, sondern auf diese Art und Weise lässt sich auch die Rotorblattgesamtlänge erhöhen. Die Leistungsausbeute des Rotorblattes nimmt mit dem Quadrat des Rotordurchmessers zu.

Dieser Vorzug des erfindungsgemäßen Verfahrens trägt auch dem Umstand Rechnung, dass aus bestehenden Betriebserfahrungen mit Windkraftanlagen neuerdings bessere Erkenntnisse über mögliche Lastreserven der maschinenbaulichen Anlagenteile und der Tragstruktur vorhanden sind.

Bei dem erfindungsgemäßen Verfahren ist vorgesehen, das zu ertüchtigende Rotorblatt ganz oder teilweise zu umhüllen oder zu ummanteln, wobei die dabei verwendete faserverstärkte oder gewebeverstärkte Kunststoffmembrane für das zu ertüchtigende Rotorblatt so konfektioniert wird, dass das aerodynamische Profil des zu ertüchtigenden Rotorblattes möglichst eng anliegend abgebildet wird.

Die Ummantelung und/oder Verlängerung des zu ertüchtigenden Rotorblattes erfolgt vorzugsweise so, dass ein Auseinanderbrechen der Originalstruktur des zu ertüchtigenden Rotorblattes verhindert wird.

Bei einer zweckmäßigen Variante des Verfahrens ist vorgesehen, dass die Kunststoffmembrane stoffschlüssig mit dem zu ertüchtigenden Rotorblatt verbunden wird. Beispielsweise kann diese mit dem zu ertüchtigenden Rotorblatt über einen Haftvermittler, beispielsweise über einen Klebstoff oder einen Zement, verbunden werden.

Alternativ kann die Kunststoffmembrane auf das zu ertüchtigende Rotorblatt aufgeschrumpft werden.

Das Verfahren umfasst die Vorkonfektionierung der Kunststoffmembrane als dem ursprünglichen aerodynamischen Profil des zu ertüchtigenden Rotorblattes angepasstes Element.

Die Kunststoffmembrane kann an dem zu ertüchtigenden Rotorblatt, das heißt, in situ, ganz oder teilweise mit einem Haftvermittler oder einem Zement, beispielsweise in Form einer Vergussmasse hinterfüllt werden.

Die Kunststoffmembrane kann als umfänglich geschlossener Strumpf oder Schlauch ausgebildet sein und über eine Rotorblattspitze des zu ertüchtigenden Rotorblattes auf das zu ertüchtigende Rotorblatt aufgezogen werden. Unter einem Strumpf im Sinne der vorliegenden Erfindung ist ein Gebilde zu verstehen, welches über die Rotorblattspitze aufgezogen oder eingefädelt wird, wobei der Strumpf an seinem der Rotorblattspitze zugewandten Ende geschlossen ist. Alternativ kann die Kunststoffmembrane als beidseitig offener Schlauch ausgebildet sein. Der Strumpf oder Schlauch kann jeweils durch Klemmen, Heften, Kleben, Schrumpfen oder Schweißen befestigt werden.

Grundsätzlich kann vorgesehen sein, das zu ertüchtigende Rotorblatt vollständig oder teilweise mit der Kunststoffmembrane zu ummanteln. Unter *"vollständig"* ist in diesem Sinne eine vollständige Ummantelung von der Rotorblattspitze bis zu einer Rotorblattwurzel zu verstehen, unter *"teilweise"* im Sinne der Erfindung ist eine Ummantelung eines Längsabschnitts des zu ertüchtigenden Rotorblattes mit der Kunststoffmembrane zu verstehen. In jedem Fall ist vorgesehen, dass die Kunststoffmembrane vollständig den Umfang des zu ertüchtigenden Rotorblattes umschließt.

Bei einer besonders vorteilhaften Variante des Verfahrens gemäß der Erfindung kann vorgesehen sein, dass an der Kunststoffmembrane aerodynamisch wirksame Strömungselemente angeformt oder befestigt werden. Idealerweise werden die aerodynamisch wirksamen Strömungselemente bei der Herstellung der Kunststoffmembrane an diese angeformt. Als aerodymanische Strömungselemente können beispielsweise Spoiler, sogenannte Winglets oder Grenzschichtzäune vorgesehen sein, die mit Hilfe der Kunststoffmembrane sicher an der Rotorblattstruktur, beispielsweise im Rotorblattwurzelbereich, befestigt werden können.

Die Betriebspraxis bei bestehenden Windkraftanlagen hat gezeigt, dass nachträglich an das Rotorblatt angeklebte aerodynamisch wirksame Zusatzbauteile bzw. aerodynamisch wirksame Strömungselemente nicht dauerhaft an dem Rotorblatt haften.

Mit Hilfe der Kunststoffmembrane, die bei dem Verfahren gemäß der Erfindung Anwendung findet, können außerdem Blitzrezeptoren und/oder Blitzableiter an der Außenseite des Rotorblatts befestigt werden. Bei einer besonders bevorzugten Variante des Verfahrens gemäß der Erfindung ist vorgesehen, dass an oder in der Kunststoffmembrane Injektionskanäle für eine Vergussmasse vorgesehen sind und dass über die Injektionskanäle eine Vergussmasse als Füllmasse und/oder Haftvermittler in einen Zwischenraum zwischen einer Mantelfläche des zu ertüchtigenden Rotorblattes und der Kunststoffmembrane eingebracht wird. Die Injektionskanäle lassen sich so ausbilden, dass Austrittsöffnungen für die Vergussmasse an solchen Stellen auf der Innenseite der Kunststoffmembrane vorgesehen werden, an denen eine gezielte Aufdickung der Mantelfläche des Rotorblattes oder ein Ausgleich von Unebenheiten in der Mantelfläche des zu ertüchtigenden Rotorblattes erzielt werden soll.

Vorzugsweise ist die Kunststoffmembrane als ein mit Kunststoff beschichtetes oder getränktes technisches Gewebe oder Gelege ausgebildet, das Fasern umfasst, die ausgewählt sind aus einer Gruppe umfassend Glasfasern, PVC-Fasern, PTFE-Fasern, Kohlefasern, Polyesterfasern und Kombinationen der vorgenannten Materialien.

Solche Kunststoffmembranen sind auch als sogenannte "Strukturmembranen" bekannt. Diese können mehr der weniger flexibel ausgebildet sein, wobei die Faserstruktur der Kunststoffmembrane eine entsprechende Zugfestigkeit verleiht.

Wie vorstehend bereits erwähnt, kann die Faserverstärkung der Kunststoffmembrane in Form eines Gewebes mit Schuss- und Kettfäden ausgebildet sein. Im Gegensatz dazu sind bei einem Gelege von Fasern, das alternativ in Betracht kommt, die Fasern nicht im Sinne eines herkömmlichen Gewebes miteinander verwoben, sondern nur schichtweise mit sich kreuzenden Zugrichtungen gelegt.

Die der Erfindung zugrundeliegende Aufgabe wird weiterhin gelöst durch eine Kunststoffmembrane zur Verwendung bei dem erfindungsgemäßen Verfahren, wobei die Kunststoffmembrane als der Kontur des zu ertüchtigenden Rotorblattes angepasster Strumpf oder Schlauch aus einem verstärkenden Gewebe oder Gelege aus zugfesten Fasern ausgebildet ist, welches mit einem Polymer beschichtet ist oder in eine Polymermatrix eingebettet ist.

Die Kunststoffmembrane kann angeformte oder eingeformte Injektionskanäle für eine Vergussmasse aufweisen. Die Injektionskanäle oder auch Injektionsschläuche können unterschiedliche Längen aufweisen und auf unterschiedlichen Abschnitten der Kunststoffmembrane innenseitig Mündungsöffnungen aufweisen.

Alternativ oder zusätzlich können an der Kunststoffmembrane aerodynamisch wirksame Strömungselemente, beispielsweise in Form von Spoilern, Winglets oder Grenzschichtzäunen befestigt sein. Weiterhin können in der Kunststoffmembrane Blitzableiter, Blitzrezeptoren oder dergleichen befestigt sein.

Die Kunststoffmembrane kann wenigstens teilweise selbsttragend steif ausgebildet sein. Beispielsweise kann die Kunststoffmembrane abschnittsweise flexibel und abschnittsweise steif ausgebildet sein.

Bei einer Variante der Kunststoffmembrane gemäß der Erfindung, bei welcher diese als Strumpf ausgebildet ist, kann diese eine formstabile, starre Kappe aufweisen, die die Form einer Rotorblattspitze abbildet. Hierdurch wird eine Rotorblattverlängerung erzielt. Da die Rotorblattspitze strukturell höher belastet ist, ist es sinnvoll, diese starr auszuführen.

Ein weiterer Gesichtspunkt der Erfindung betrifft ein ertüchtigtes Rotorblatt für eine Windkraftanlage mit einem (ursprünglichen) aerodynamischen Profil, umfassend eine Ummantelung und/oder Verlängerung des aerodynamischen Profils als Ertüchtigungsmaßnahme in Form wenigstens einer faserverstärkten oder gewebeverstärkten Kunststoffmembrane, die an die Mantelfläche des aerodynamischen Profils angepasst ist und der ursprünglichen Kontur des Rotorblattes folgend mit dem Rotorblatt verbunden ist.

Das ertüchtigte Rotorblatt weist vorzugsweise wenigstens eine Kunststoffmembrane auf, die eines oder mehrere der Merkmale der vorstehend beschriebenen Kunststoffmembrane aufweist.

## Patentansprüche

1. Verfahren zur Ertüchtigung von Rotorblättern bestehender Windkraftanlagen, umfassend die Ummantelung und/oder Verlängerung des Profils wenigstens eines zu ertüchtigenden Rotorblattes, wobei die Ummantelung und/oder Verlängerung dadurch erfolgt, dass wenigstens eine faserverstärkte oder gewebeverstärkte Kunststoffmembrane an eine Mantelfläche des ursprünglichen aerodynamischen Profils des zu ertüchtigenden Rotorblattes angepasst wird und der ursprünglichen Kontur des zur ertüchtigenden Rotorblattes folgend mit dem zu ertüchtigenden Rotorblatt verbunden wird.

2. Verfahren nach Anspruch 1, **dadurch gekennzeichnet, dass** die Kunststoffmembrane stoffschlüssig mit dem zu ertüchtigenden Rotorblatt verbunden wird.

3. Verfahren nach einem der Ansprüche 1 oder 2, **dadurch gekennzeichnet, dass** die Kunststoffmembrane als dem ursprünglichen aerodynamischen Profil des zu ertüchtigenden Rotorblattes angepasstes Element vorkonfektioniert wird.

4. Verfahren nach einem der Ansprüche 1 bis 3, **dadurch gekennzeichnet, dass** die Kunststoffmembrane an dem zu ertüchtigenden Rotorblatt mit einem Haftvermittler oder einem Zement hinterfüllt wird.

5. Verfahren nach einem der Ansprüche 1 bis 4, **dadurch gekennzeichnet, dass** die Kunststoffmembrane als umfänglich geschlossener Strumpf oder Schlauch ausgebildet wird und über eine Rotorblattspitze des zu ertüchtigenden Rotorblattes auf das zu ertüchtigende Rotorblatt aufgezogen wird.

6. Verfahren nach einem der Ansprüche 1 bis 5, **dadurch gekennzeichnet, dass** das zu ertüchtigenden Rotorblatt vollständig oder teilweise mit der Kunststoffmembrane ummantelt wird.

7. Verfahren nach einem der Ansprüche 1 bis 6, **dadurch gekennzeichnet, dass** an die Kunststoffmembrane aerodynamisch wirksame Strömungselemente angeformt werden.

8. Verfahren nach einem der Ansprüche 1 bis 7, **dadurch gekennzeichnet, dass** an oder in die Kunststoffmembrane Injektionskanäle für eine Vergussmasse vorgesehen sind und dass über die Injektionskanäle eine Vergussmasse als Füllmasse und/oder Haftvermittler in einen Zwischenraum zwischen einer Mantelfläche des zu ertüchtigenden Rotorblattes und der Kunststoffmembrane eingebracht wird.

9. Verfahren nach einem der Ansprüche 1 bis 8, **dadurch gekennzeichnet, dass** die Kunststoffmembrane als ein mit Kunststoff beschichtetes oder getränktes technisches Gewebe oder Gelege ausgebildet ist, umfassend Fasern ausgewählt aus einer Gruppe umfassend Glasfasern, PVC-Fasern, die PTFE-Fasern, Kohlefasern, Polyesterfasern und Kombinationen der vorgenannten Materialien.

10. Kunststoffmembrane zur Verwendung bei dem Verfahren nach einem der Ansprüche 1 bis 9 als der Kontur eines zu ertüchtigenden Rotorblattes angepasster Strumpf oder Schlauch mit einem verstärkenden Gewebe oder Gelege aus zugfesten Fasern, welches mit einem Polymer beschichtet ist oder in eine Polymermatrix eingebettet ist.

11. Kunststoffmembrane nach Anspruch 10, **dadurch gekennzeichnet, dass** diese angeformte oder eingeformte Injektionskanäle für eine Vergussmasse aufweist.

12. Kunststoffmembrane nach einem der Ansprüche 10 oder 11, an welcher aerodynamisch wirksame Strömungselemente befestigt sind.

13. Kunststoffmembrane nach einem der Ansprüche 10 bis 12, **dadurch gekennzeichnet, dass** diese wenigstens teilweise selbsttragend steif ausgebildet ist.

14. Kunststoffmembrane nach einem der Ansprüche 10 bis 13 als Strumpf, der eine formstabile, starre Kappe aufweist.

15. Ertüchtigtes Rotorblatt für eine Windkraftanlage mit einem, aerodynamischen Profil, umfassend eine Ummantelung und/oder Verlängerung des aerodynamischen Profils als Ertüchtigungsmaßnahme in Form wenigstens einer faserverstärkten oder gewebeverstärkten Kunststoffmembrane, die an die Mantelfläche des aerodynamischen Profils angepasst ist und der ursprünglichen Kontur des Rotorblattes folgend mit dem Rotorblatt verbunden ist.

16. Ertüchtigtes Rotorblatt nach Anspruch 15 mit einer Kunststoffmembrane, die die Merkmale eines der Ansprüche 10 bis 14 aufweist.

## Claims

1. A method for strengthening rotor blades of existing wind turbines, comprising the cladding and/or extension of the profile of at least one rotor blade to be strengthened, wherein the cladding and/or extension is effected in that at least one fiber-reinforced or fabric-reinforced plastic membrane is matched to a shell surface of the original aerodynamic profile of the rotor blade to be strengthened and, following the original contour of the rotor blade to be strengthened, is connected to the rotor blade to be strengthened.

2. The method as claimed in claim 1, **characterized in that** the plastic membrane is connected in a materially bonded manner to the rotor blade to be strengthened.

3. The method as claimed in either of claims 1 or 2, **characterized in that** the plastic membrane is prefabricated as an element matched to the original aerodynamic profile of the rotor blade to be strengthened.

4. The method as claimed in anyone of claims 1-3, **characterized in that** the plastic membrane on the rotor blade to be strengthened is packed with a bonding agent or a cement.

5. The method as claimed in anyone of claims 1-4, **characterized in that** the plastic membrane is configured as a circumferentially closed sock or tube, and drawn on, over a rotor-blade tip of the rotor blade to be strengthened, onto the rotor blade to be strengthened.

6. The method as claimed in anyone of claims 1-5, **characterized in that** the rotor blade to be strengthened is completely or partially clad with the plastic membrane.

7. The method as claimed in anyone of claims 1-6, **characterized in that** aerodynamically active flow elements are formed onto the plastic membrane.

8. The method as claimed anyone of claims 1-7, **characterized in that** injection channels for a grouting component are provided at or in the plastic membrane, and via the injection channels a grouting component is inserted, as a filling component and/or bonding agent, into a space between a shell surface of the rotor blade to be strengthened and the plastic membrane.

9. The method as claimed in anyone of claims 1-8, **characterized in that** the plastic membrane is configured as a plastic coated or impregnated technical fabric or scrim, comprising fibers selected from a group comprising glass fibers, PVC fibers, PTFE fibers, carbon fibers, polyester fibers and combinations of the afore mentioned materials.

10. A plastic membrane for use in the method as claimed in anyone of claims 1-9, configured as a sock or tube, comprising a reinforcing fabric or scrim of high-tensile fibers, that is matched to the contour of the rotor blade to be strengthened, and that is coated with a polymer or embedded in a polymer matrix.

11. The plastic membrane as claimed in claim 10, **characterized in that** it has formed on or formed in injection channels for a grouting component.

12. The plastic membrane as claimed in either claim 10 or 11 to which aerodynamically active flow elements are fastened.

13. The plastic membrane as claimed in any of claims 10-12, **characterized in that** it is configured at least partially of a self-supporting stiffness.

14. The plastic membrane as claimed in anyone of claims 10-13, configured as a sock, which comprises a dimensionally stable, rigid cap.

15. A strengthened rotor blade for a wind turbine comprising an aerodynamic profile, comprising a cladding and/or extension of the aerodynamic profile, configured as a strengthening measure, in the form of at least one fiber-reinforced or fabric-reinforced plastic membrane, which is matched to the shell surface of the aerodynamic profile and, following the original contour of the rotor blade, is connected to the rotor blade.

16. The strengthened rotor blade as claimed in claim 15, having-a plastic membrane, wherein the plastic membrane exhibits the features of one of the claims 10-14.

## Revendications

1. Procédé de renforcement de pales de rotor d'éoliennes existantes, comportant le revêtement et/ou le prolongement du profil d'au moins une pale de rotor à renforcer, dans lequel le revêtement et/ou le prolongement s'effectuent par le fait qu'au moins une membrane en matière synthétique renforcée par des fibres ou à renforcement textile est adaptée à une surface d'enveloppe du profil aérodynamique d'origine de la pale de rotor à renforcer et est reliée à la pale de rotor à renforcer de manière à suivre le contour d'origine de la pale de rotor à renforcer.

2. Procédé selon la revendication 1, **caractérisé en ce que** la membrane en matière synthétique est reliée par liaison de matière à la pale de rotor à renforcer.

3. Procédé selon l'une des revendications 1 et 2, **caractérisé en ce que** la membrane en matière synthétique est préfabriquée comme élément adapté au profil aérodynamique d'origine de la pale de rotor à renforcer.

4. Procédé selon l'une des revendications 1 à 3, **caractérisé en ce que** l'arrière de la membrane en matière synthétique est rempli avec un promoteur d'adhésion ou un ciment sur la pale de rotor à renforcer.

5. Procédé selon l'une des revendications 1 à 4, **caractérisé en ce que** la membrane en matière synthétique est réalisée en tant que manchon ou tuyau flexible fermé circonférentiellement et est tirée sur la pale de rotor à renforcer, au-delà d'une pointe de pale de rotor de la pale de rotor à renforcer.

6. Procédé selon l'une des revendications 1 à 5, **caractérisé en ce que** la pale de rotor à renforcer est revêtue complètement ou partiellement avec la membrane en matière synthétique.

7. Procédé selon l'une des revendications 1 à 6, **caractérisé en ce que** des éléments d'écoulement à effet aérodynamique sont formés sur la membrane en matière synthétique.

8. Procédé selon l'une des revendications 1 à 7, **caractérisé en ce que** des canaux d'injection pour une masse de scellement sont prévus sur ou dans la membrane en matière synthétique, et **en ce que**, par le biais des canaux d'injection, une masse de scellement est introduite, comme masse de remplissage et/ou promoteur d'adhésion, dans un espace intermédiaire entre une surface d'enveloppe de la pale de rotor à renforcer et la membrane en matière synthétique.

9. Procédé selon l'une des revendications 1 à 8, **caractérisé en ce que** la membrane en matière synthétique est réalisée comme étoffe ou nappe technique revêtue ou imprégnée de matière synthétique, comportant des fibres sélectionnées à partir d'un groupe comportant des fibres de verre, des fibres de PVC, des fibres de PTFE, des fibres de carbone, des fibres de polyester et des combinaisons des matières susmentionnées.

10. Membrane en matière synthétique destinée à être utilisée dans le procédé selon l'une des revendications 1 à 9 comme manchon ou tuyau flexible adapté au contour d'une pale de rotor à renforcer, comportant une étoffe ou une nappe de renforcement constituée de fibres résistant à la traction, laquelle est revêtue avec un polymère ou est noyée dans une matrice polymère.

11. Membrane en matière synthétique selon la revendication 10, **caractérisée en ce que** celle-ci comprend des canaux d'injection formés ou moulés pour une masse de scellement.

12. Membrane en matière synthétique selon l'une des revendications 10 et 11, à laquelle sont fixés des éléments d'écoulement à effet aérodynamique.

13. Membrane en matière synthétique selon l'une des revendications 10 à 12, **caractérisée en ce que** celle-ci est réalisée au moins partiellement de manière raide et autoportante.

14. Membrane en matière synthétique selon l'une des revendications 10 à 13 comme manchon, lequel comprend une coiffe rigide de forme stable.

15. Pale de rotor renforcée pour une éolienne, présentant un profil aérodynamique, comportant un revêtement et/ou un prolongement du profil aérodynamique comme mesure de renforcement sous la forme d'au moins une membrane en matière synthétique renforcée par des fibres ou à renforcement textile, qui est adaptée à la surface d'enveloppe du profil aérodynamique et est reliée à la pale de rotor de manière à suivre le contour d'origine de la pale de rotor.

16. Pale de rotor renforcée selon la revendication 15 comprenant une membrane en matière synthétique qui présente les caractéristiques de l'une des revendications 10 à 14.
